# EUROPÄISCHE PATENTANMELDUNG

(11) **EP 2 769 648 A1**
(43) Veröffentlichungstag der Anmeldung: **27.08.2014**
(21) Anmeldenummer: 13180547.5
(22) Anmeldetag: 15.08.2013
(51) Int. Cl.: A47F 5/08

(54) **Vorrichtung zur Innenausstattung eines Aufenthaltsraumes**

(30) Priorität: 25.02.2013 DE 102013203062
(71) Anmelder: WIBU Wirtschaftsbund sozialer Einrichtungen eG, 22926 Ahrensburg (DE)
(72) Erfinder: Augustin, Volker, 33719 Bielefeld (DE); Overhoff, Sylvia, 48249 Dülmen (DE)
(74) Vertreter: Kruspig, Volkmar

(57) **Zusammenfassung**

Die Erfindung betrifft eine Vorrichtung zur Innenausstattung eines Aufenthaltsraumes, umfassend eine Mehrzahl verschiedener Möbelelemente, wobei ein an Innenwänden des Aufenthaltsraumes angeordneter Verschieberahmen mit Führungselementen vorgesehen ist, wobei die Führungselemente zum Arretieren der Möbelelemente und zu einem wahlweisen Verschieben der Möbelelemente in beliebige Richtungen auf dem Verschieberahmen ausgebildet sind. Bei einer Ausführungsform weisen die Führungsschienen stromführende Kontaktbahnen und die Möbelelemente stromabgreifende Kontaktiermittel auf, wobei die Kontaktierbahnen über eine Spannungsversorgung mit elektrischer Spannung beaufschlagbar sind und die Kontaktiermittel mit einem elektrischen Verbraucher innerhalb des Möbelelementes koppelbar sind

## Beschreibung

Die Erfindung betrifft eine Vorrichtung zur Innenausstattung eines Aufenthaltsraumes nach Anspruch 1.

Bei derartigen Aufenthaltsräumen handelt es sich insbesondere um betreute Wohn- und oder Arbeitsräume sowie bewohnte Räume im Pflegebereich, die in entsprechenden Einrichtungen, wie Pflegeheimen oder Seniorenheimen anzutreffen sind. In solchen Einrichtungen sollen Menschen eine ihren Bedürfnissen und Gebrechen gemäße Behandlung erfahren, wobei verbliebene Fähigkeiten nach Möglichkeit gefördert und degenerative Prozesse in ihrem Verlauf möglichst gestoppt oder so lange wie möglich verzögert werden sollen. Dies betrifft insbesondere Menschen mit Demenzerkrankungen, Patienten im Wachkoma oder Menschen in der Palliativpflege.

Für solche Patienten ist der Aufenthaltsraum, in dem sie die meiste Zeit des Tages verbringen, von oftmals entscheidender Bedeutung. Dessen Inneneinrichtung und Farbgestaltung, die Positionen der Möbel, insbesondere der Schränke, Tischen und Betten bildet ein Umfeld, das entscheidend dafür ist, ob sich der Patient innerhalb des Raumes wohlfühlt, ob er objektiv und subjektiv Wertschätzung erfährt und ob dessen Privatsphäre und Würde gewahrt ist. Lange Aufenthalte in immer den gleichen Umgebungen mit immer den gleichen Gegenständen stumpfen ab, sie führen zur Isolation und Deprivation der Betroffenen und sie können dadurch die empathische Beziehung zwischen dem Patienten, dessen Angehörigen und dem Pflegepersonal nachhaltig beeinträchtigen. Im palliativmedizinischen Bereich, bei dem die Patienten würdevoll dem Ende ihres persönlichen Lebens entgegengehen sollen, geht es darüber hinaus auch darum, diesen Aufenthalt sinnstiftend zu gestalten und dies mit einer entsprechenden Abschiedskultur zu verbinden.

Verschiedene Analysen haben hierbei gezeigt, dass der Innenausstattung der Aufenthaltsräume hier eine Schlüsselrolle zukommt. Immer die gleichen Möbel an immer den gleichen Positionen im Raum stumpfen ab und führen dazu, dass de Patienten letztlich sehr viel an Lebensqualität und Würde genommen wird. Andererseits liegt es in der Natur von Räumen in medizinischen Einrichtungen, in Pflegeheimen und Palliativstationen, dass diese funktional ausgerichtet sind und dass der zur Verfügung stehende Raum begrenzt ist. Derartige Räume können faktisch nicht umgeräumt werden, ohne dass die Betreuung des Patienten darunter leidet. Die Innenausstattung solcher Räume kann also praktisch nur in sehr engen Grenzen abgeändert werden.

Es ergibt sich daher die Aufgabe, Möglichkeiten anzugeben, mit denen einerseits eine die Fähigkeiten des Patienten fördernde und dessen Würde und Individualität gewährleistende Umgebung einerseits mit einem höchsten Maß an flexibler Innenausstattung erreicht werden kann, wobei andererseits der damit einhergehende Platzbedarf im Idealfall nicht steigt und die notwendige medizinische Versorgung in jedem Falle gesichert ist und nicht beeinträchtigt wird.

Die Aufgabe wird mit einer Vorrichtung zur Innenausstattung von Aufenthaltsräumen mit den Merkmalen des Anspruchs 1 gelöst. Die Unteransprüche enthalten zweckmäßige und/oder vorteilhafte Ausgestaltungen der Vorrichtung.

Die Vorrichtung zur Innenausstattung eines Aufenthaltsraumes umfasst eine Mehrzahl unterschiedlicher Möbelelemente, wobei ein an Innenwänden des Aufenthaltsraumes angeordneter Verschieberahmen mit Führungselementen vorgesehen ist. Die Führungselemente sind zum Arretieren der Möbelelemente und zu einem wahlweisen Verschieben der Möbelelemente entlang des Verschieberahmens ausgebildet. Der Vorrichtung liegt der Grundgedanke zugrunde, eine Reihe von Möbelelementen vorzusehen, diese an den Innenwänden des Raumes anzubringen und zueinander verschiebbar zu gestalten. Einerseits befinden sich alle Möbelelemente an einer immer gleichen Wand des Raumes, andererseits lassen diese sich aber über den Verschieberahmen praktisch beliebig immer neu arrangieren und umkonfigurieren, sodass der Innenraum eine variable Wirkung erhält. Hierzu dient der Verschieberahmen. Dieser arretiert zum einen über dessen Führungselemente die Möbelelemente, andererseits gestattet er es, die Möbelelemente ohne Umstände zu verfahren und neu zu arrangieren, wobei der durch die Möbelelemente insgesamt eingenommene Bereich im Wesentlichen unverändert bleibt und so die Funktionalität des Raumes nicht beeinträchtigt.

Bei einer Ausgestaltung sind die Führungselemente des Verschieberahmens als Führungsschienen ausgebildet, wobei die Möbelelemente Einhängemittel zum Einhängen, Befestigen und Verschieben innerhalb der Führungsschienen aufweisen. Die Möbelelemente können ohne weiteres von dem Verschieberahmen abgelöst und gegen andere Möbelelemente ausgetauscht werden. Die Verschiebbarkeit der Möbelelemente bleibt dabei stets erhalten.

Bei einer zweckmäßigen Ausgestaltung bilden die Führungsschienen des Verschieberahmens ein jeweils an der Innenwand verlaufendes Verschieberaster, wobei die Möbelelemente maßlich an das Verschieberaster angepasst sind und entlang der Führungsschiene in vertikaler und/oder horizontaler Richtung auf der Ebene der Innenwand verschiebbar sind. Dadurch ist es praktisch möglich, die Möbelelemente durch horizontale und vertikale Bewegungen an jede beliebige Stelle an der Innenwand zu verschieben und somit der Innenwand eine immer neue Gestaltung zu verleihen. Zugleich ändert sich der Platzbedarf der Möbelelemente insgesamt nicht, sodass der Aufenthaltsraum jederzeit optimal genutzt werden kann.

Bei einer weiteren Ausgestaltung weisen die Führungsschienen stromführende Kontaktbahnen und die Möbelelemente stromabgreifende Kontaktiermittel auf, wobei die Kontaktierbahnen über eine Spannungsversorgung mit elektrischer Spannung beaufschlagbar sind und die Kontaktiermittel mit einem elektrischen Verbraucher innerhalb des Möbelelementes koppelbar sind. Hierdurch lassen sich beispielsweise illuminierbare Möbelelemente einfügen und ohne Kabelbaum an jeder Stelle der Innenwand beleuchten.

Der Begriff "Innenwand" kann durchaus auch die Raumdecke bezeichnen. In einer derartigen Ausgestaltung weist der Verschieberahmen deckenseitig befestigte Führungsschienen auf, wobei die deckenseitigen Führungsschienen zur Aufnahme von in der Deckenebene verschiebbaren Möbelelementen, insbesondere Beleuchtungseinrichtungen, vorgesehen sind.

Bei einer Ausführungsform weisen die Möbelelemente Arretierelemente zum Einhängen in den Verschieberahmen auf, wobei die Arretierelemente über Kipp- und Drehelemente ein wahlweise ausführbares Herauskippen, Neigen, Drehen und/oder Schwenken des Möbelelementes aus der durch den Verschieberahmen definierten Verschiebeebene ermöglichen. Diese Gestaltung ermöglicht somit nicht nur ein Verschieben in der Ebene der Wand, sondern auch variable Formgestaltungen senkrecht zur Verschiebeebene.

Als Möbelelemente sind beispielsweise Regalelemente, Schrankelemente, Tischelemente und/oder Bettelemente vorgesehen. Dadurch lassen sich insbesondere neue und lageveränderliche Ablageflächen schaffen, durch die der Aufenthaltsraum an immer neuen Plätzen genutzt wird.

Bei einer zweckmäßigen Ausgestaltung enthalten die Möbelelemente Rollmittel für einen Rollkontakt mit der Bodenfläche des Innenraums. Derartige Rollmittel empfehlen sich bei größeren Möbelelementen, die in Bodennähe verschoben werden sollen.

Die Vorrichtung soll nachfolgend anhand von Ausführungsbeispielen näher erläutert werden. Zur Verdeutlichung dienen die Figuren 1 bis 7. Es werden für gleiche oder gleich wirkende Teile dieselben Bezugszeichen verwendet.

Es zeigt:
- Fig. 1: eine beispielhafte Darstellung des Verschieberahmens mit einigen Möbelelementen,
- Fig. 2: eine beispielhafte Darstellung der Vorrichtung in einer ersten Konfiguration,
- Fig. 3: eine beispielhafte Darstellung der Vorrichtung in einer zweiten Konfiguration mit verschiebbaren Tischelementen,
- Fig. 4: eine beispielhafte Darstellung elektrischer Zuführungsleitungen innerhalb der Vorrichtung und eingefügten elektrischen Komponenten,
- Fig. 5: eine weitere beispielhafte Darstellung elektrischer Zuführungsleitungen innerhalb eines Teils der Vorrichtung,
- Fig. 6: eine beispielhafte Ausführungsform stromführender Führungsschienen,
- Fig. 7: beispielhafte Führungselemente zur Verschiebung und Stabilisierung der Möbelelemente in vertikaler Richtung,

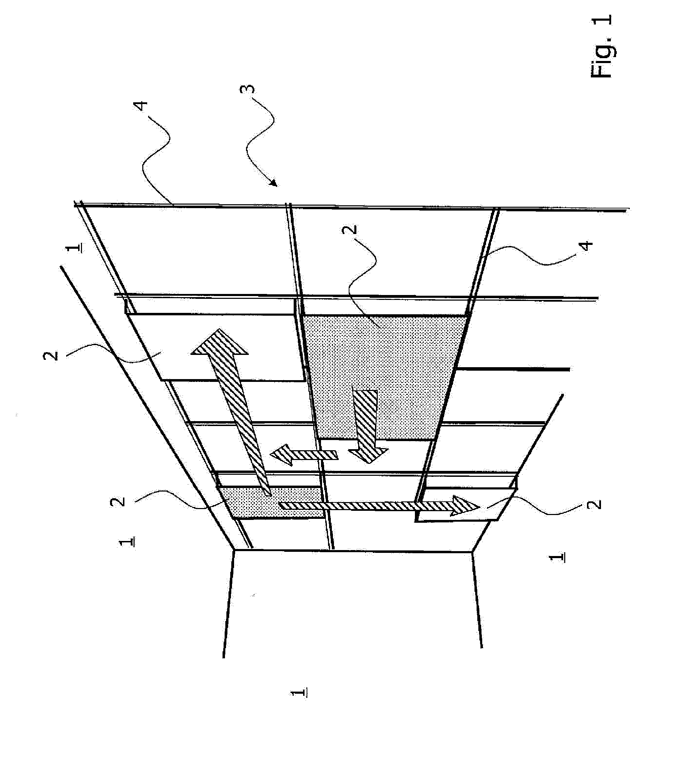

Fig. 1 zeigt eine beispielhafte Ausführungsform des Verschieberahmens in Verbindung mit einigen Möbelelementen. Dargestellt ist ein Innenraum mit einigen Innenwänden 1. Bei der nachfolgenden Beschreibung sollen die Decke und der Boden des Innenraums auch unter dem Begriff der Innenwand zusammengefasst werden. Eine der hier gezeigten Innenwände weist einige Möbelelemente 2 auf. Diese befinden sich an einem Verschieberahmen 3, der an der Innenwand befestigt ist. Der Verschieberahmen besteht aus einer Reihe von Führungselementen, die im hier vorliegenden Beispiel als Führungsschienen 4 ausgebildet sind. Wie in der Figur verdeutlicht, können die Möbelelemente entlang der Führungsschienen vertikal und horizontal bewegt und somit an beliebigen Orten des Verschieberahmens positioniert werden.

Die Möbelelemente können praktisch beliebig ausgebildet sein. Möglich sind hier insbesondere Regalelemente mit oder ohne Tür, Schrank- und Behältniselemente bzw. auch Beleuchtungselemente. Diese können entsprechend unterschiedlich weit in den Raum hineinragen. Zweckmäßig ist eine Gestaltung, bei der der die Maße der Möbelelemente jeweils ganzzahlige Vielfache eines Rastermaßes sind.

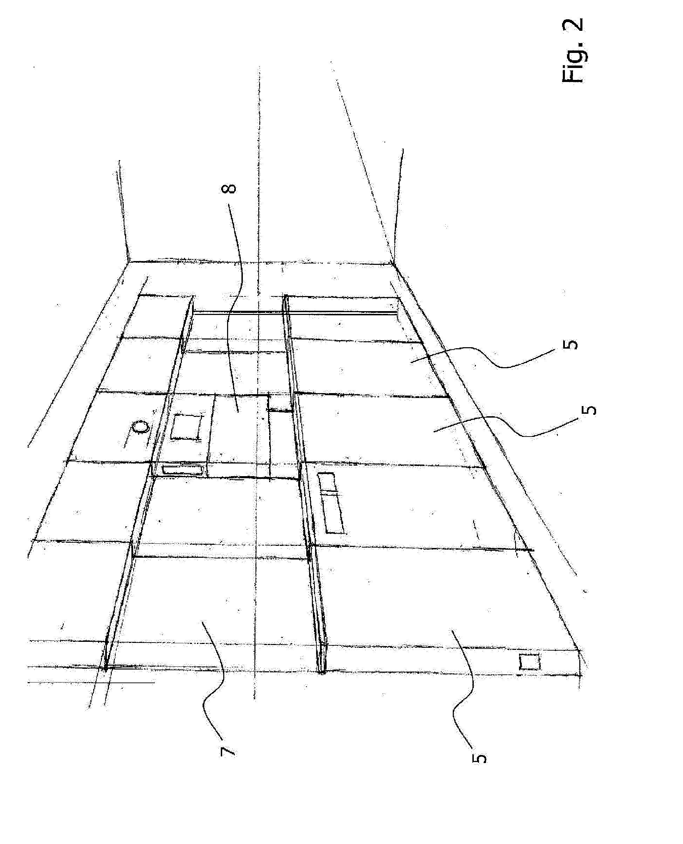

Fig. 2 zeigt hierzu ein weiteres Beispiel. Die Vorrichtung enthält hier verschiedene Schrankelemente 5 und ein Medienelement 8. Über den Schrankelementen 5 befinden sich jeweils Freiräume und Leerstellen 7. Diese lassen sich beliebig dadurch ausfüllen, indem entweder das Medienelement seitlich in die benachbarte Leerstelle 7 oder eines der Schrankelemente 5 vertikal nach oben verschoben wird. An der Stelle des Medienelementes kann auch ein Beleuchtungselement eingefügt sein.

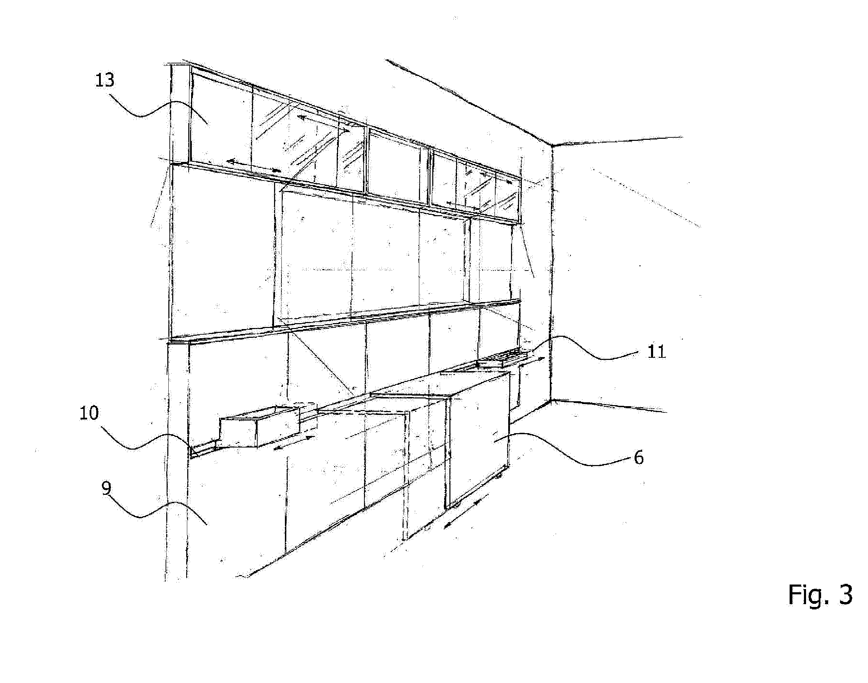

Fig. 3 zeigt eine weitere Ausführungsform der Vorrichtung. Bei dem hier gegebenen Beispiel ist der Verschieberahmen 3 durch Verkleidungselemente 9 verdeckt. Diese weisen einen Verschiebeschlitz 10 auf, der hier durchgängig ausgebildet ist und in dem sich eine Reihe von Möbelelementen längs verschieben lassen. Als Möbelelemente sind hier vorgesehen: zwei Beleuchtungselemente 11 und zwischen den Beleuchtungselementen angeordnete Tischelemente 6. Die Verkleidungselemente 9 können entweder undurchsichtig ausgebildet sein und beispielsweise die Anmutung einer Holzoberfläche aufweisen. Möglich ist aber auch eine Ausführungsform mit durchsichtigen oder durchscheinenden Oberflächen sowie einer in den Verkleidungselementen integrierten Innenbeleuchtung, die insbesondere wechselnde Farbtöne erzeugt und somit die Stimmung des Innenraumes vorteilhaft und angenehm beeinflusst.

Die Leerstellen 7 können bei diesem Beispiel frei bleiben. Möglich ist deren Nutzung als Projektionsfläche, die sich beispielsweise im Sichtbereich eines im Krankenbett liegenden Patienten befindet und von einem über dem Kopf des Patienten befindlichen Projektor bestrahlt wird. Die oberste Zeile der Vorrichtung aus Fig. 3 wird hier durch stationäre Möbelelemente in Form eines durchgehenden Rahmens 13 gebildet. Dieser kann zumindest teilweise inwändig beleuchtet sein. In Verbindung mit der Beleuchtung weist der Rahmen 13 auf der zum Aufenthaltsraum zeigenden Seite eine Reihe von übereinander verschiebbaren transparenten bzw. durchscheinenden Glas- oder Kunststoffflächen auf. Im Inneren des durchgehenden Rahmens befinden sich weiße Lichtquellen. Die transparenten bzw. durchscheinenden Flächen wirken als Farbfilter und erzeugen über Farbmischungen wechselnde Farbstimmungen für den Innenraum.

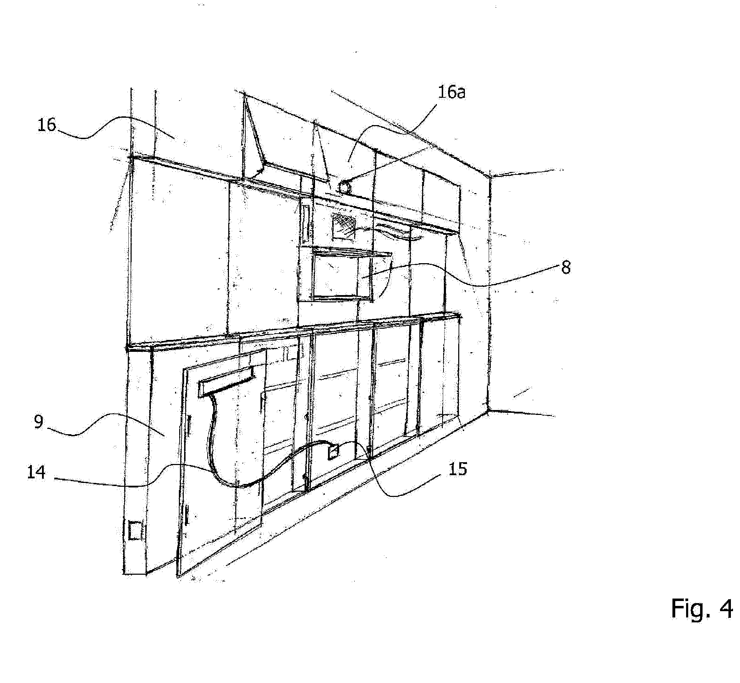

Fig. 4 zeigt eine weitere Ausführungsform der erfindungsgemäßen Vorrichtung, insbesondere hinsichtlich der elektrischen Kontaktierung. Bei dem hier vorliegenden Beispiel befindet sich hinter den Verkleidungselementen 9 ein Kabelbaum 14, der mit einem zentralen Elektrizitätsanschluss 15 verbunden ist. Weitere Kabelbäume sind in den übrigen Abschnitten der Vorrichtung ebenfalls verlegt. Die Figur zeigt weiterhin das in Fig. 2 bereits erwähnte Medienelement 8, diesmal mit einem aufgeklappten Fach. Die Elemente 16 aus der oberen Reihe können in diesem Beispiel in Richtung des Innenraums aufgeklappt werden. Vorgesehen ist hier weiterhin ein Punktstrahler 16a.

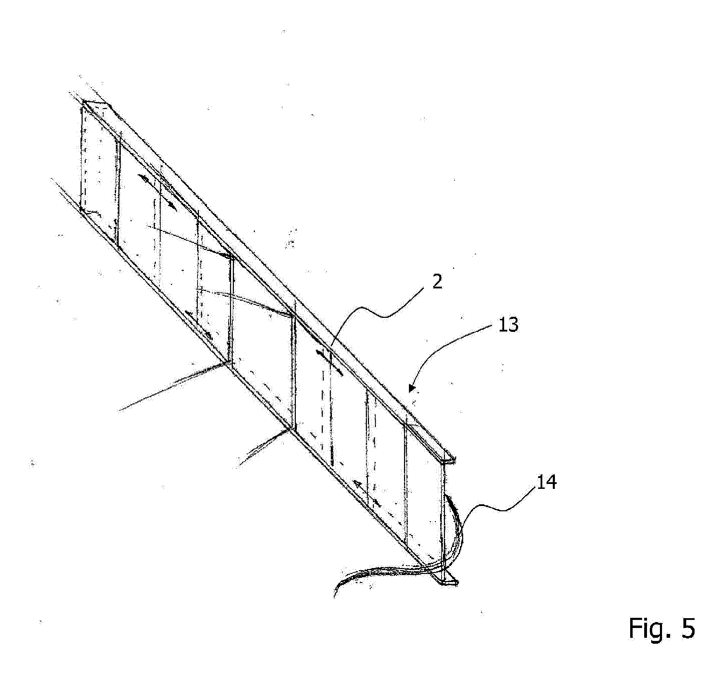

Fig. 5 zeigt einen beispielhaften Kabelbaum zur Spannungsversorgung der in Fig. 3 gezeigten Beleuchtungselemente im durchgehenden Rahmen 13. Der Kabelbaum beginnt bei einer Spannungsversorgung, die zweckmäßigerweise hinter den Verkleidungselementen des Verschieberahmens positioniert ist, und mündet in die entsprechenden Lampen bzw. Leuchtkörper innerhalb des Rahmens 13 ein.

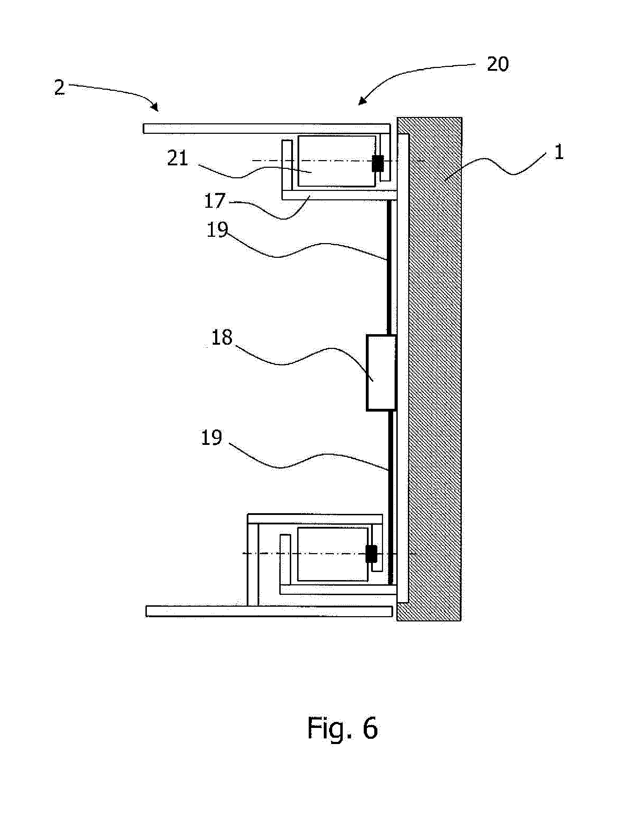

An der Stelle des Kabelbaumes können jedoch auch elektrische Kontaktschienen vorgesehen sein, die insbesondere entlang der Führungselemente 4 ausgebildet sind. Fig. 6 zeigt hierzu eine beispielhafte Ausführungsform. Bei dem hier gezeigten Beispiel sind an der Innenwand 1 zwei U-Profile 17 als Führungselemente befestigt. In der Innenwand 1 ist ein hier nicht gezeigtes Kabel verlegt. Dieses mündet in einen Anschluss 18 des Verschieberahmens ein. Dieser Anschluss kann die üblichen elektrischen Schaltelemente, insbesondere Transformatoren und Gleichrichterschaltungen, aufnehmen. Von dem Anschluss 18 verlaufen jeweils Kabel 19 zu den Führungsschienen 17. Innerhalb der Führungsschienen 17 ist über Einhängemittel 20 das Möbelelement 2 jeweils eingehängt und arretiert. Bei dem hier gezeigten Beispiel sind die Einhängemittel als Laufrollen 21 ausgeführt. Die Laufrollen stehen im elektrischen Kontakt mit den Führungsschienen 17 und verankern zusätzlich das Möbelelement 2 am Verschieberahmen. Die Laufrollen greifen eine über den Führungsschienen anliegenden Potentialunterschied ab und leiten über hier nicht gezeigte elektrische Leiter die Spannungsdifferenz zu einem innerhalb des Möbelelementes angeordneten Verbraucher. Die Spannungsdifferenz ist hinreichend niedrig und somit ungefährlich. Sie beträgt beispielsweise 20 Volt und genügt beispielsweise zum Betreiben von Beleuchtungseinrichtungen auf LED-Basis. Ein Vorteil einer solchen Gestaltung besteht darin, dass in einem solchen Fall kein Kabelbaum beim Verschieben der Möbelelemente verlegt und nachgeführt werden muss.

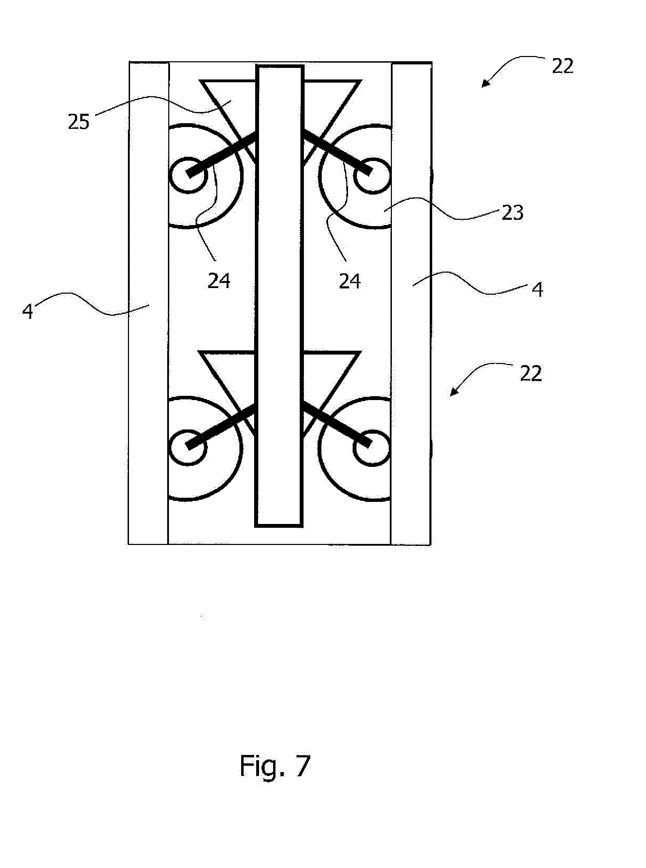

Bei der vertikalen Verschiebung der Möbelelemente kommt es darauf an, dass sich die Elemente möglichst einfach und umstandslos bewegen lassen, aber andererseits zuverlässig an den erreichten Positionen arretiert sind und auch deren Durchrutschen beim Verschiebevorgang verhindert wird. Eine Möglichkeit zum Realisieren dieser Anforderungen bietet das Ausführungsbeispiel aus Fig. 7. Das Beispiel zeigt vertikale Laufelemente 22. Diese können wie hier gezeigt in einer doppelten Ausführung vorhanden, aber auch nur einfach ausgebildet sein. Die hier gezeigten vertikalen Laufelemente bestehen jeweils aus einem Rollenpaar 23, das auf den hier vertikalen Führungsschienen 4 des Verschieberahmens abrollt. Dieses Rollenpaar ist endseitig an einer Schenkelanordnung 24 angebracht. Ein weiteres Teil des vertikalen Führungselementes ist durch einen Keil 25 gebildet, der sich im Scheitelbereich der Schenkelanordnung 24 befindet.

Die gesamte Anordnung der vertikalen Führungselemente ist so ausgeführt, dass diese bei einer Verschiebung des Möbelelementes in horizontaler Richtung, d.h. im hier vorliegenden Beispiel senkrecht zur Bildebene, nicht im Kontakt mit den horizontalen Teilen des Verschieberahmens stehen und über diese problemlos hinweg geschoben werden können.

Bei einer vertikalen Verschiebung des Möbelelementes rollen die einzelnen Rollen des Rollenpaares 23 zunächst an den vertikalen Führungsschienen ab, sofern die Geschwindigkeit der Verschiebung einen bestimmten Betrag nicht überschreitet. Sobald das Möbelelement nach unten beschleunigt, nimmt die Reibung zwischen den Rollen des Rollenpaares und den Führungsschienen zu. Die Rollenpaare verkanten und werden gegen die Führungsschienen gedrückt. Dabei spreizen sich die Schenkelanordnungen 24 auf. In der Folge sinken die Keile 25 hinab und drücken die Rollen der Rollenpaare über deren Flanken gegen die vertikalen Führungselemente. Das Möbelelement wird nun über die verkeilte Anordnung der Keile 25 und der Rollenpaare 23 in ihrer momentanen vertikalen Stellung arretiert.

Die erfindungsgemäße Vorrichtung wurde anhand von Ausführungsbeispielen näher erläutert. Weitere Ausführungsformen ergeben sich aus den Unteransprüchen und sind im Rahmen fachmännischen Handelns möglich.

### Bezugszeichenliste

- 1: Innenwand
- 2: Möbelelement
- 3: Verschieberahmen
- 4: Führungsschiene
- 5: Schrankelement
- 6: Tischelement
- 7: Leerstelle
- 8: Medienelement
- 9: Verkleidungselement
- 10: Verschiebeschlitz
- 11: Beleuchtungselement
- 12: Regalelement
- 13: durchgehender Rahmen
- 14: Kabelbaum
- 15: Elektrizitätsanschluss
- 16: Elemente des durchgehenden Rahmens
- 17: U-Profil als Führungsschiene
- 18: elektrischer Anschluss
- 19: Kabel
- 20: Einhängemittel
- 21: Laufrolle
- 22: vertikales Laufelement
- 23: Rollenpaar
- 24: Schenkelanordnung
- 25: Keil

## Patentansprüche

1. Vorrichtung zur Innenausstattung eines Aufenthaltsraumes, umfassend eine Mehrzahl verschiedener Möbelelemente (2),
wobei ein an Innenwänden des Aufenthaltsraumes angeordneter Verschieberahmen (3) mit Führungselementen vorgesehen ist, wobei die Führungselemente zum Arretieren der Möbelelemente und zu einem wahlweisen Verschieben der Möbelelemente in beliebige Richtungen auf dem Verschieberahmen ausgebildet sind.

2. Vorrichtung nach Anspruch 1,
**dadurch gekennzeichnet, dass**
die Führungselemente des Verschieberahmens als Führungsschienen (4) ausgebildet sind, wobei die Möbelelemente Einhängemittel (20) zum Einhängen, Befestigen und Verschieben auf den Führungsschienen aufweisen.

3. Vorrichtung nach einem der Ansprüche 1 oder 2,
**dadurch gekennzeichnet, dass**
die Führungsschienen (4) des Verschieberahmens (3) ein jeweils an der Innenwand verlaufendes Verschieberaster bilden, wobei die Möbelelemente (2) maßlich an das Verschieberaster angepasst sind und entlang der Führungsschiene in vertikaler und/oder horizontaler Richtung auf der Ebene der Innenwand verschiebbar sind.

4. Vorrichtung nach einem der vorhergehenden Ansprüche,
**dadurch gekennzeichnet, dass**
die Führungsschienen (4) stromführende Kontaktbahnen und die Möbelelemente (2) stromabgreifende Kontaktiermittel aufweisen, wobei die Kontaktierbahnen über eine Spannungsversorgung mit elektrischer Spannung beaufschlagbar sind und die Kontaktiermittel mit einem elektrischen Verbraucher innerhalb des Möbelelementes koppelbar sind.

5. Vorrichtung nach einem der vorhergehenden Ansprüche,
**dadurch gekennzeichnet, dass**
der Verschieberahmen (3) deckenseitig befestigte Führungsschienen aufweist, wobei die deckenseitigen Führungsschienen zur Aufnahme von in der Deckenebene verschiebbaren Möbelelementen, insbesondere Beleuchtungseinrichtungen, vorgesehen ist.

6. Vorrichtung nach einem der vorhergehenden Ansprüche,
**dadurch gekennzeichnet, dass**
die Möbelelemente (2) Arretierelemente zum Einhängen in den Verschieberahmen (3) aufweisen, wobei die Arretierelemente über Kipp- und Drehelemente ein wahlweise ausführbares Herauskippen, Neigen, Drehen und/oder Schwenken des Möbelelementes aus der durch den Verschieberahmen definierten Verschiebeebene ermöglichen.

7. Vorrichtung nach einem der vorhergehenden Ansprüche,
**dadurch gekennzeichnet, dass**
als Möbelelemente (2) Regalelemente, Schrankelemente, Tischelemente und/oder Bettelemente vorgesehen sind.

8. Vorrichtung nach einem der vorhergehenden Ansprüche,
**dadurch gekennzeichnet, dass**
die Möbelelemente (2) Rollmittel für einen Rollkontakt mit der Bodenfläche des Innenraums enthalten.
